# EUROPÄISCHE PATENTSCHRIFT

(11) **EP 2 126 337 B1**
(45) Veröffentlichungstag und Bekanntmachung des Hinweises auf die Patenterteilung: **14.01.2015**
(21) Anmeldenummer: 08715959.6
(22) Anmeldetag: 22.02.2008
(51) Int. Cl.: F02N 11/08

(54) **VERFAHREN ZUR STEUERUNG EINES AUTOMATISCHEN ABSCHALTVORGANGS EINER BRENNKRAFTMASCHINE**
METHOD FOR CONTROLLING AN AUTOMATIC SWITCHING OFF PROCESS FOR AN INTERNAL COMBUSTION ENGINE
PROCÉDÉ DE COMMANDE D'UN PROCESSUS DE COUPURE AUTOMATIQUE D'UN MOTEUR À COMBUSTION INTERNE

(30) Priorität: 28.02.2007 DE 102007009871
(43) Veröffentlichungstag der Anmeldung: 02.12.2009
(73) Patentinhaber: Bayerische Motoren Werke Aktiengesellschaft, 80809 München (DE)
(72) Erfinder: ABENDROTH, Dirk, Dr., 80337 München (DE); WEIGL, Werner, 85737 Ismaning (DE); STRÄHLE, Peter, 85586 Poing (DE)
(86) Internationale Anmeldenummer: PCT/EP2008/001408
(87) Internationale Veröffentlichungsnummer: WO 2008/104328

(56) Entgegenhaltungen:
- DE-A1- 10 030 290
- FR-A- 2 874 657
- FR-A- 2 874 660
- JP-A- 2004 211 575
- US-A1- 2004 089 258

## Beschreibung

Die Erfindung bezieht sich auf ein Verfahren zur Steuerung eines automatischen Abschaltvorgangs einer Brennkraftmaschine in einem Kraftfahrzeug nach dem Oberbegriff des Anspruch 1.

Um Kraftstoffverbrauch und Schadstoffemissionen zu reduzieren, werden derzeit Verfahren und Systeme entwickelt und zum Teil auch bereits eingesetzt, welche die Brennkraftmaschine eines Kraftfahrzeugs unter bestimmten Voraussetzungen bzw. bei Vorliegen vorgegebener Abschaltbedingungen automatisch abschalten und bei Vorliegen vorgegebener Anschaltbedingungen automatisch wieder anschalten. Derartige Verfahren und Systeme bzw. Start-Stopp-Einrichtungen sind vor allem für den Stadtverkehr zur Reduzierung des Kraftstoffverbrauchs geeignet, da im Stadtverkehr das Fahrzeug oft an Ampeln oder aufgrund des Verkehrs zum Stehen kommt und der Betrieb der Brennkraftmaschine nicht erforderlich ist.

So ist aus der DE 101 61 343 A1 eine automatische Stopp- und Anlasssteuervorrichtung für einen Verbrennungsmotor bekannt, wobei die Steuervorrichtung entsprechende Maßnahmen zum Abschalten des Verbrennungsmotors vornimmt, wenn alle genannten Abschaltbedingungen erfüllt sind. Beispielsweise muss die Geschwindigkeit des Fahrzeugs unter einem vorgegebenen Grenzwert liegen, bei Handschaltgetrieben darf kein Gang eingelegt sein und bei Automatikgetriebe-Fahrzeugen muss die Gangschaltstellung des Getriebes in Neutralstellung liegen.

Unter gewissen Umständen kann es jedoch vorkommen, dass der Fahrer zwar ein automatisches Abschalten der Brennkraftmaschine wünscht und alle notwendigen Handlungen dafür vornimmt, dies aber aufgrund fehlender systemseitiger Voraussetzungen nicht möglich ist. So offenbart die DE 100 30 290 A1 ein Verfahren und ein System zum automatischen Abschalten und Wiederanlassen eines Verbrennungsmotors, bei dem ein automatisches Abschalten verhindert wird, wenn der Ladezustand der Batterie des Fahrzeugs unterhalb einer vorgegebenen Schwelle liegt.

Des Weiteren sollte ein automatisches Abschalten der Brennkraftmaschine in jedem Fall verhindert werden, wenn mit hoher Wahrscheinlichkeit davon ausgegangen werden kann, dass ein erneuerter Start, unabhängig davon, ob es sich um einen automatischen oder einen herkömmlichen manuellen Start handelt, nicht ohne Weiteres vorgenommen werden kann. Würde die Brennkraftmaschine abgeschaltet werden und wäre danach ein erneuter Start nicht möglich, würde dies zu Kundenbeanstandungen führen.

Aufgabe der Erfindung ist es, ein Verfahren zur Steuerung eines automatischen Abschaltvorgangs einer Brennkraftmaschine anzugeben, durch das ein automatisches Abschalten der Brennkraftmaschine verhindert wird, wenn mit hoher Wahrscheinlichkeit davon ausgegangen werden kann, dass ein erneuter Start nicht ohne Weiteres möglich ist.

Diese Aufgabe wird durch ein Verfahren nach Patentanspruch 1 gelöst. Vorteilhafte Weiterbildungen ergeben sich aus den abhängigen Ansprüchen.

Der Erfindung liegt die Erkenntnis zugrunde, dass eine Brennkraftmaschine, die wegen eines Defekts am Anlasser oder an einer anderen Komponente des Startsystems oder des (Starter-)Batteriezustands (z.B. defekte oder leere Batterie) nicht über einen bordeigenen Starter gestartet werden konnte, sondern aufgrund eines Anschleppvorgangs gestartet wurde, nicht automatisch abgeschaltet werden sollte, da ein erneuter Start vermutlich wieder nur durch ein Anschleppen möglich wäre. Ein automatisches Abschalten der Brennkraftmaschine ist vom Fahrer somit nicht gewünscht.

Grundgedanke der Erfindung ist, dass bei einer aufgrund eines Anschleppvorgangs gestarteten Brennkraftmaschine ein automatisches Abschalten der Brennkraftmaschine verhindert werden muss. Das erfindungsgemäße Verfahren zur Steuerung eines automatischen Abschaltvorgangs einer Brennkraftmaschine in einem Kraftfahrzeug zeichnet sich dadurch aus, dass ein automatisches Abschalten der Brennkraftmaschine verhindert wird, wenn die Brennkraftmaschine innerhalb dieses Fahrzyklus, also bis zum nächsten manuellen ausgeführten Abschaltvorgang der Brennkraftmaschine, oder innerhalb einer vorgegebenen Zahl vorangegangener Fahrzyklen durch einen Anschleppvorgang gestartet wurde.

Vorteilhafterweise wird ein automatisches Abschalten der Brennkraftmaschine dadurch verhindert, dass eine die automatische Abschaltung der Brennkraftmaschine vornehmende Funktion, die Teil einer sog. "Automatischen Start Stopp Automatik" oder einer "Hybrid-Steuereinheit" sein kann, deaktiviert wird. Die Deaktivierung bietet den Vorteil, dass auch aufgrund einer Fehlfunktion, bspw. aufgrund einer fehlerhaften Signalauswertung, ein automatisches Abschalten der Brennkraftmaschine für die Dauer der Deaktivierung nicht vorgenommen werden kann. Des Weiteren führt eine Deaktivierung des gesamten Systems zu einer Reduzierung der Systembelastung (Auslastung des Prozessors und des Speichers).

Vorteilhafterweise wird das Anschleppen der Brennkraftmaschine durch Detektieren und Auswerten eines die Aktivität und/oder Nichtaktivität der Anlassereinheit wiedergebenden Signals erkannt. In einer vorteilhaften Ausgestaltung der Erfindung wird ein Anschleppen der Brennkraftmaschine erkannt, wenn nach Erkennen eines erfolgreichen Starts der Brennkraftmaschine das die Aktivität und/oder Nichtaktivität der Anlassereinheit wiedergebende Signal keine Aktivität der Anlassereinheit seit Beginn des Startvorgangs zeigt. Somit wird nach dem Ausschlussprinzip bei fehlender Starteransteuerung auf einen aufgrund externer Einflüsse hervorgerufenen Start der Brennkraftmaschine geschlossen und ein automatisches Abschalten der Brennkraftmaschine unterbunden.

Vorteilhafterweise wird ein erfolgreicher Start der Brennkraftmaschine erkannt, wenn das Einleiten eines Startvorgangs erkannt wird und am Ende des Startvorgangs bspw. ein Drehzahlüberschwinger der Kurbelwellendrehzahl erkannt wird. Ein (erfolgreicher) Startvorgang der Brennkraftmaschine, also ein Übergang vom stehenden Motor zum laufenden Motor kann durch eine Auswertung eines die Aktivität der Brennkraftmaschine wiedergebenden Signals, bspw. durch eine Auswertung der Kurbeiwellendrehzahl erkannt werden. Ein erfolgreicher Start wird dann am Ende des Startvorgangs durch einen sich einstellenden und detektierbaren Drehzahlüberschwinger und/oder das Erreichen der Leerlaufdrehzahl erkannt. Eine derartige Erkennung eines erfolgreichen Starts kann durch eine Auswertung innerhalb eines Zeitfensters in seinem zeitlichen Ablauf plausibilisiert werden und durch zusätzliche Timing- und Entprellmechanismen verbessert werden.

Wird ein Startvorgang als erfolgreicher Start identifiziert, wird die Aktivität und/oder Nichtaktivität der Anlassereinheit der Brennkraftmaschine durch Auswertung des die Aktivität und/oder Nichtaktivität der Anlassereinheit der Brennkraftmaschine wiedergebenden Signals , vorteilhafterweise für ein vorgegebenes Zeitfenster oder der Brennkraftmaschine vorgegebenen Drehzahl überprüft. Vorteilhafterweise ist das die Aktivität und/oder Nichtaktivität der Anlassereinheit wiedergebende Signal derart ausgestaltet, dass es bei Erkennen der Aktivität des Anlassers seinen Status von "Nicht Aktiv" auf "Aktiv" ändert. Das Signal kann nach einem vorgegebenen Zeitintervall und erfolgter Auswertung oder bei Erreichen des Startendes und erfolgter Auswertung vom Status "Aktiv" auf den Status "Nicht-Aktiv" zurückgesetzt werden. Als finale Bedingung eines erfolgreichen Anschleppens muss zusätzlich zur Nichtaktivität des Starters bei Startbeginn auch der Erfolg des Anschleppens durch die Erkennung des Startendes folgen - nur dann darf das Anschleppen als erfolgt gewertet werden.

Zusätzlich zum Verhindern eines automatischen Abschaltvorgangs der Brennkraftmaschine können bei einem Erkennen eines Anschleppens der Brennkraftmaschine auch andere Maßnahmen im Hinblick auf die Betriebsweise der Brennkraftmaschine oder des gesamten Fahrzeugs getroffen werden, die zu einer Verbesserung der Betriebsweise bei angeschleppten Fahrzeugen mit Brennkraftmaschinen führen.

Ist das Kraftfahrzeug bspw. mit einer hybriden Antriebseinheit bestehend aus einer Brennkraftmaschine und einem Elektromotor zum Antreiben des Kraftfahrzeugs ausgestattet, ist es bspw. sinnvoll, einen Wechsel des Antriebs von der Brennkraftmaschine zum Elektromotor (d.h. einen automatischen Stopp der Brennkraftmaschine) zu unterbinden, wenn ein Anschleppen der Brennkraftmaschine erkannt wurde, bspw. aufgrund eines defekten Startsystems. Dadurch wird verhindert, däss nach einem Wechsel des Antriebs von Brennkraftmaschine zum Elektromotor das Fahrzeug zum Stillstand kommt, da das Startsystem auch dann aufgrund seines Defekts die Brennkraftmaschine nicht wieder starten kann. Ein erneutes Anlassen der Brennkraftmaschine wäre dann nämlich nicht möglich. Es entsteht die Gefahr des "Lie-genbleibens".

Zusammenfassend ist festzustellen, dass bei einem Erkennen einer angeschleppten Brennkraftmaschine neben der Deaktivierung einer das automatische Abschalten der Brennkraftmaschine vornehmenden Funktion zusätzlich verschiedenste Maßnahmen eingeleitet werden können, um somit sog. "Liegenbleiber" zu vermeiden. Dadurch können Gewährleistungskosten und Kundenbeanstandungen vermieden werden. Weiterhin können auch einzelne Komponenten oder Teilsysteme im angeschleppten Fall in einem schonenden "Notbetrieb" o. ä. gefahren werden, um evtl. Ausfälle zu vermeiden.

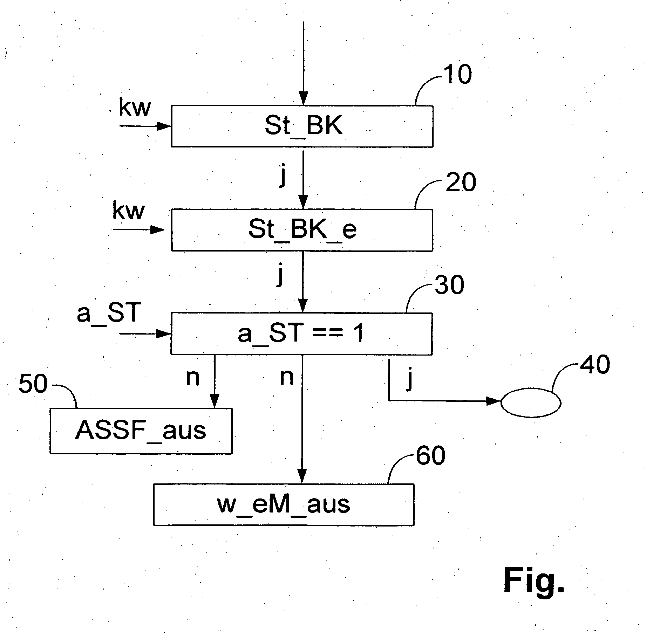

Das erfindungsgemäße Verfahren wird nun anhand eines Ausführungsbeispiels näher erläutert. Dazu zeigt die einzige Figur ein vereinfachtes Ablaufdiagramm zur Deaktivierung einer die automatische Abschaltung der Brennkraftmaschine vornehmenden Funktion, sobald ein Anschleppen der Brennkraftmaschine erkannt wurde.

Es wird davon ausgegangen, dass das Kraftfahrzeug, welches zur Ausführung des Ablaufdiagramms geeignet ausgestaltet ist, mit einer sog. "Motor-Start-Stopp-Automatik" zum automatischen Stoppen und Wiederanlassen der Brennkraftmaschine ausgestattet ist. Zusätzlich ist das Kraftfahrzeug mit einem hybriden Antriebssystem bestehend aus einer Brennkraftmaschine und einem Elektromotor zum Antreiben des Kraftfahrzeugs ausgestattet, wobei die beiden Antriebseinheiten alternativ für den Antrieb genutzt werden können. Der im Ablaufdiagramm dargestellte Algorithmus kann in einem dafür vorgesehen Steuergerät, bspw. im Motorsteuergerät implementiert sein.

Das Ablaufdiagramm für das erfindungsgemäße Verfahren beginnt im Schritt 10. Dort wird durch Auswertung der Kurbelwellendrehzahl kw festgestellt, ob die Brennkraftmaschine gestartet wird bzw. gestartet werden soll (Anfang des Starts), also St_BK vorliegt. Sobald sich die Kurbelwellendrehzahl ausgehend von Null (Stillstand) erhöht, wird der Beginn eines Startversuchs der Brennkraftmaschine St_BK erkannt. Daraufhin wird im Schritt 20 die Kurbelwellendrehzafil kw im Hinblick auf einen Drehzahlüberschwinger ausgewertet. Sobald der Drehzahlüberschwinger erkannt wird, wird ein erfolgreicher Start der Brennkraftmaschine St_BK_e erkannt und zum Schritt 30 gegangen.

Im nächsten Schritt 30 wird ein die Aktivität einer Anlassereinheit der Brennkraftmaschine wiedergebendes Signal a_ST ausgewertet. Dieses Signal ist 0, wenn der Starter bzw. die Anlasseinheit nicht aktiv ist und seit dem Start der Brennkraftmaschine St_BK noch nicht aktiv war. Das Signal wechselt von 0 auf 1, sobald eine Aktivität der Anlassereinheit festgestellt wird bzw. wurde. Im Schritt 30 wird überprüft, ob die Anlassereinheit aktiv ist bzw. war, indem überprüft wird, ob a_ST = 0 ist. Ist oder war die Anlassereinheit (a_ST == 1) aktiv, wird das Ablaufdiagramm im Schritt 40 beendet und a_ST = 0 gesetzt.

War die Anlassereinheit nicht aktiv, liegt also a_ST == 1 nicht vor, wird im Schritt 50 die Funktion zum automatischen Stoppen und Wiederanlassen der Antriebseinheit durch Erzeugen eines Deaktivierungssignals ASSF_aus deaktiviert und parallel dazu im Schritt 60 ein möglicher (zukünftiger) Wechsel vom Betrieb der Brennkraftmaschine in den Betrieb des Elektromotors zum Antreiben des Fahrzeugs durch Erzeugen eines Wechselverhinderungssignal w_eM_aus verhindert. Dadurch wird verhindert, dass die Brennkraftmaschine automatisch abgeschaltet wird und anschließend nicht mehr gestartet werden kann, wenn ein Antrieb durch die Brennkraftmaschine notwendig ist oder zumindest sinnvoll erscheint.

Alternativ zu diesem Ausführungsbeispiel können zusätzlich oder alternativ noch eine Vielzahl anderer Funktionen deaktiviert oder beeinflusst werden, so dass diese der Funktionsweise einer angeschleppten Brennkraftmaschine gerecht werden. Außer der Eingangsgröße kw in Schritt 10 und 20 können eine Vielzahl anderer Eingahgsparameter zur Erkennung der Startsituation hinzugefügt werden.

## Patentansprüche

1. Verfahren zur Steuerung eines automatischen Abschaltvorgangs einer Brennkraftmaschine in einem Kraftfahrzeug, wobei in Abhängigkeit vorgegebener Betriebsbedingungen ein automatisches Abschalten der Brennkraftmaschine verhindert wird, **dadurch gekennzeichnet, dass** ein automatisches Abschalten der Brennkraftmaschine verhindert wird (MSA_aus), wenn die Brennkraftmaschine innerhalb dieses Fahrzyklus oder innerhalb einer vorgegebenen Zahl vorangegangener Fahrzyklen durch einen Anschleppvorgang gestartet wurde.

2. Verfahren nach Anspruch 1, **dadurch gekennzeichnet, dass** ein automatisches Abschalten der Brennkraftmaschine durch Deaktivierung einer das automatische Abschalten der Brennkraftmaschine vornehmenden Funktion (MSA_aus) verhindert wird.

3. Verfahren nach Anspruch 1 oder 2, **dadurch gekennzeichnet, dass** ein Anschleppen der Brennkraftmaschine durch Auswertung eines die Aktivität und/oder Nichtaktivität der Anlassereinheit wiedergebenden Signals (a_ST) erkannt wird.

4. Verfahren nach Anspruch einem der vorangegangenen Ansprüche, **dadurch gekennzeichnet, dass** ein die Aktivität und/oder Nichtaktivität einer Anlassereinheit der Brennkraftmaschine wiedergebendes Signal (a_ST) detektiert wird und ein Anschleppen der Brennkraftmaschine erkannt wird, wenn nach Erkennen eines erfolgreichen Starts der Brennkraftmaschine (St_BK_e) ein die Aktivität und/oder Nichtaktivität der Anlassereinheit wiedergebende Signal (a_ST) keine Aktivität der Anlassereinheit seit Beginn des Startvorgangs der Brennkraftmaschine zeigt.

5. Verfahren nach Anspruch 4, **dadurch gekennzeichnet, dass** ein erfolgreicher Start der Brennkraftmaschine (St_BK_e) erkannt wird, wenn ein Startvorgang (St_BK) erkannt wird und am Ende des Startvorgangs ein Drehzahlüberschwinger und/oder das Erreichen einer vorgegeben Leerlaufdrehzahl erkannt wird.

6. Verfahren nach Anspruch 4 oder 5, **dadurch gekennzeichnet, dass** ein Startvorgang (St_BK, St_BK_e) durch Auswerten eines die Aktivität der Brennkraftmaschine wiedergebenden Signals (kw) erkannt wird.

7. Verfahren nach einem der vorangegangenen Ansprüche, **dadurch gekennzeichnet, dass** bei einem Erkennen eines Anschleppens der Brennkraftmaschine zusätzlich weiter Maßnahmen vorgenommen werden.

## Claims

1. A method for controlling an automatic switch-off process for an internal combustion engine in a motor vehicle, wherein, depending on predetermined operating conditions, an automatic switch-off of the internal combustion engine is prevented, **characterised in that** an automatic switch-off of the internal combustion engine is prevented (MSA_off), when the internal combustion engine was started by a towing process within this operating cycle or within a predetermined number of previous operating cycles.

2. A method according to claim 1, **characterised in that** an automatic switch-off of the internal combustion engine is prevented by deactivating a function (MSA_off) carrying out the automatic switch-off of the internal combustion engine.

3. A method according to claim 1 or 2, **characterised in that** a tow-start of the internal combustion engine is detected by evaluating a signal (a_ST) representing the activity and/or non-activity of the starter unit.

4. A method according to any one of the preceding claims, **characterised in that** a signal (a_ST) representing the activity and/or non-activity of a starter unit of the internal combustion engine is detected and a tow-start of the internal combustion engine is detected when, after detection of a successful start of the internal combustion engine (St_BK_e), a signal (a_ST) representing the activity and/or non-activity of the starter unit shows no activity of the starter unit since the beginning of the starting process of the internal combustion engine.

5. A method according to claim 4, **characterised in that** a successful start of the internal combustion engine (St_BK_e) is detected when a starting process (St_BK) is detected and, at the end of the starting process, a speed overrun and/or the reaching of a predetermined idling speed is detected.

6. A method according to claim 4 or 5, **characterised in that** a starting process (St_BK, St_BK_e) is detected by evaluating a signal (kw) representing the activity of the internal combustion engine.

7. A method according to any one of the preceding claims, **characterised in that** when a tow-start of the internal combustion engine is detected, further measures are additionally carried out.

## Revendications

1. Procédé de commande d'un processus automatique de coupure d'un moteur à combustion interne d'un véhicule automobile selon lequel, en fonction de conditions de fonctionnement prédéfinies on interdit une coupure automatique du moteur à combustion interne,
procédé **caractérisé en ce qu'**
on évite la coupure automatique du moteur à combustion interne (MSA_aus) si le moteur à combustion interne a été démarré dans un cycle de conduite ou dans un nombre prédéterminé de cycles de conduite antérieurs par une opération de remorquage.

2. Procédé selon la revendication 1,
**caractérisé en ce qu'**
on interdit la coupure automatique du moteur à combustion interne par la désactivation d'une fonction effectuant la coupure automatique du moteur à combustion interne (MSA_aus).

3. Procédé selon la revendication 1 ou 2,
**caractérisé en ce qu'**
on reconnaît le remorquage du moteur à combustion interne par l'exploitation de signaux (a_ST) reproduisant l'activité ou la non-activité de l'unité de démarrage.

4. Procédé selon l'une quelconque des revendications précédentes,
**caractérisé en ce qu'**
on détecte le signal (a_ST) traduisant l'activité et/ou la non-activité d'une unité de démarrage du moteur à combustion interne et on reconnaît le remorquage du moteur à combustion interne si après détection d'un démarrage réussit du moteur à combustion interne (St_BK_e) un signal (a_ST) reproduisant l'activité et/ou la non-activité de l'unité de démarrage montre qu'il n'y a pas d'activité de l'unité de démarrage depuis le début de la phase de démarrage du moteur à combustion interne.

5. Procédé selon la revendication 4,
**caractérisé en ce qu'**
on reconnaît un démarrage réussit du moteur à combustion interne (St_BK_e) si une opération de démarrage (St_BK) était reconnue et si à la fin de l'opération de démarrage on a détecté un dépassement de la vitesse de rotation et/ou le fait d'atteindre la vitesse de rotation de ralenti, prédéfinie.

6. Procédé de selon la revendication 4 ou 5,
**caractérisé en ce qu'**
on détecte une opération de démarrage (St_BK_St_BK_e) par l'exploitation d'un signal (kw) reproduisant l'activité du moteur à combustion interne.

7. Procédé selon l'une des revendications précédentes,
**caractérisé en ce que**
si l'on détecte le remorquage du moteur à combustion interne, on prend d'autres mesures.
